# EUROPÄISCHE PATENTSCHRIFT

(11) **EP 1 988 311 B1**
(45) Veröffentlichungstag und Bekanntmachung des Hinweises auf die Patenterteilung: **14.09.2011**
(21) Anmeldenummer: 08005702.9
(22) Anmeldetag: 26.03.2008
(51) Int. Cl.: F16H 25/20

(54) **Lagereinheit und damit ausgestattete Lineareinheit**
Bearing unit and linear actuator provided with such unit
Palier et actionneur linéaire équipé d'un tel palier

(30) Priorität: 30.03.2007 DE 202007004690 U
(43) Veröffentlichungstag der Anmeldung: 05.11.2008
(73) Patentinhaber: Robert Bosch GmbH, 70469 Stuttgart (DE)
(72) Erfinder: Keller, Bernhard, 97535 Wasserlosen-Kaisten (DE); Hoherz, Roland, 97490 Kützberg (DE)
(74) Vertreter: Maiß, Harald

(56) Entgegenhaltungen:
- DE-A1- 10 222 522
- GB-A- 2 185 301
- US-A- 3 851 983
- US-A- 5 062 734

## Beschreibung

Die Erfindung betrifft eine Lagereinheit, umfassend ein Gehäuse und ein in dem Gehäuse um eine Drehachse drehbar gelagertes Verbindungselement zum Herstellen einer drehfesten Verbindung zwischen einer Antriebswelle und einer Gewindespindel eines Gewindetriebs, wobei das Verbindungselement an seinem der Gewindespindel zugewandten Ende eine zur Drehachse koaxial verlaufende Ausnehmung zur Aufnahme eines Endabschnitts der Gewindespindel aufweist.

Eine derartige Lagereinheit ist beispielsweise aus der DE 102 22 585 A1 bekannt. Bei dieser Lagereinheit ist das Ende der Gewindespindel über eine gesondert ausgebildete Verbindungshülse mit der Antriebswelle verbunden.

Bei einer Ausführungsform wird die Verbindungshülse mit der Gewindespindel durch Madenschrauben verbunden, welche in, in der Verbindungshülse vorgesehene Gewindebohrungen eingreifen und sich an der Außenumfangsfläche der Gewindespindel abstützen. Nachteilig an dieser Lösung ist, dass die Verbindungshülse und die Gewindespindel aufgrund dieser Befestigungsart zwangsläufig nicht vollständig koaxial zueinander angeordnet sind und die Verbindung daher unvermeidbar eine gewisse Unwucht aufweist.

Bei einer anderen Ausführungsform ist die Gewindespindel mit der Verbindungshülse durch Reibschweißen verbunden, was im Vergleich mit einer Schraubverbindung eine in hohem Maße aufwendige Verbindungsart ist.

Lediglich der Vollständigkeit halber sei zum Stand der Technik auch noch auf die EP 0 552 488 B1 verwiesen, die eine aufwendig herzustellende Klebeverbindung zwischen einem Verbindungselement und dem Ende einer Gewindespindel offenbart.

Aus der DE 102 22 522 A1 die als nächster Stand der Technik angesehen wird ist eine Lagereinheit bekannt. Gemäß der Fig. 2 der DE 102 22 522 A1 umfasst die Lagereinheit ein Gehäuse 8.2 und ein in dem Gehäuse über Radialkugellager 8.1 drehbar gelagertes Verbindungselement 1.2; 7.2. Das Verbindungselement kann im Bereich des Druckrings 7.2 mit einer Gewindespindel eines Gewindetriebs fest verbunden werden. Hierfür ist es mit einer Ausnehmung versehen, die von mehreren Spannsegmenten (Nr. 7.1.1 der Fig. 4 der DE 102 22 522 A1) begrenzt wird. Die insgesamt vier Spannsegmente sind durch Schlitze voneinander getrennt, die durch Spannmittel in Form eines Druckrings 7.3 einengbar sind.

Der Nachteil dieser Ausführungsform besteht darin, dass der Antriebszapfen 1.2 über eine Kupplung mit dem zugeordneten Antriebszapfen eines Elektromotors verbunden werden muss. Dies ist aufwändig und erfordert erheblichen Bauraum in Richtung der Drehachse der Gewindespindel.

Die Aufgabe der Erfindung besteht in der Überwindung der vorstehend genannten Nachteile. Diese Aufgabe wird durch die kennzeichnenden Merkmale des Anspruchs 1 gelöst.

Um auf den Einsatz einer herkömmlichen Kupplung zu verzichten weist das Verbindungselement an seinem der Antriebswelle zugewandten Ende aber auch eine zur Drehachse koaxial verlaufende Ausnehmung auf, in welche ein Endabschnitt der Antriebswelle eingesetzt werden kann. Dabei kann das der Antriebswelle zugewandte Ende des Verbindungselements wenigstens einen Schlitz aufweisen, der mittels Spannmitteln einengbar ist, vorzugsweise wenigstens ein Paar von einander bezüglich der Drehachse diametral gegenüberliegenden Schlitzen.

Bei Einengung des wenigstens einen Schlitzes legt sich das Verbindungselement koaxial an die Außenumfangsfläche der Gewindespindel an. Dieses zentrierte Festklemmen der Gewindespindel wirkt dem Entstehen einer Unwucht effektiv entgegen. Vorteilhaft ist zudem, dass das Ende der Gewindespindel für dieses Festklemmen nicht bearbeitet zu werden braucht, was die Fertigung erheblich erleichtert.

Wenn die Spannmittel wenigstens eine Spannschraube umfassen, die in einen Spanndurchgang eingreift, welcher in einem mit dem Verbindungselement einstückigen Ansatz ausgebildet ist, so kann hierdurch der Spannvorgang auf besonders einfache Weise durchgeführt werden. Die Spannschraube kann dabei auf der einen Seite des Schlitzes in einen gewindefreien Durchgang eingeführt werden, den Schlitz überbrücken und in ein auf der anderen Seite des Schlitzes ausgebildetes Gewinde eingreifen, wobei sie sich beim Spannen mit ihrem Kopf auf der gewindefreien Seite abstützt.

Um der Bildung einer Unwucht effektiv entgegenwirken zu können, wird in Weiterbildung der Erfindung vorgeschlagen, dass das der Gewindespindel zugewandte Ende des Verbindungselements wenigstens ein Paar von einander bezüglich der Drehachse diametral gegenüberliegenden Schlitzen aufweist. Dabei können in Abhängigkeit von der Auslegungsdrehzahl der Gewindespindel die beiden dem wenigstens einen Schlitzpaar zugeordneten Spannschrauben gleich gerichtet oder einander entgegengesetzt gerichtet angeordnet sein. Die einander entgegengesetzt gerichtete Anordnung der beiden Spannschrauben hat dabei aufgrund der in einem orthogonal zur Drehachse genommenen Schnitt zur Drehachse punktsymmetrischen Anordnung dieser Spannschrauben den Vorteil der größeren Unwuchtfreiheit, was insbesondere bei hohen Drehzahlen vorteilhaft ist. Die insbesondere für niedrigere Drehzahlen geeignete gleich gerichtete Anordnung hat demgegenüber den Vorteil einfacherer und kostengünstigerer Fertigung, da die erforderlichen Gewindebohrungen in ein und derselben Aufspannung in das Verbindungselement eingebracht werden können.

Insbesondere dann, wenn das Gehäuse der Lagereinheit einstückig ausgebildet ist, kann es vorteilhaft sein, wenn die Spannmittel einen geschlitzt oder geteilt ausgeführten Klemmring umfassen. In diesem Fall kann das Verbindungselement nämlich in einfacher Weise durch das einstückig ausgebildete Gehäuse hindurchgeführt und auf der anderen Seite mit dem Klemmring bestückt werden.

Die auf der der Gewindespindel zugewandten Seite ausgebildete Ausnehmung und die auf der der Antriebswelle zugewandten Seite ausgebildete Ausnehmung können ineinander übergehen, sodass das Verbindungselement hülsen- bzw. rohrförmig ausgebildet ist. Grundsätzlich ist es auch denkbar, dass der vorstehend erwähnte Zapfen ein offener Hohlzapfen ist, so dass auch in diesem Fall an eine hülsen- bzw. rohrförmige Ausbildung des Verbindungselements gedacht werden kann. Darüber hinaus braucht der so gebildete axiale Durchgang nicht über die gesamte Länge des Verbindungselements glattwandig zu verlaufen, sondern kann auch ein- oder mehrfach gestuft ausgebildet sein.

In Weiterbildung der Erfindung wird vorgeschlagen, dass die Lagereinheit als Festlagereinheit ausgebildet ist, d.h. dass das Verbindungselement in dem Gehäuse in Richtung der Drehachse axial fest gelagert ist. Beispielsweise dann, wenn die Spannmittel auf der der Gewindespindel zugewandten Seite einen mit dem Verbindungselement einstückigen Ansatz und auf der der Antriebswelle zugewandten Seite einen Klemmring umfassen, kann die axial feste Lagerung durch Zusammenwirken von an diesem Ansatz und diesem Klemmring vorgesehenen Anlageflächen mit entsprechenden, am Gehäuse der Lagereinheit ausgebildeten Gegenanlageflächen sichergestellt werden.

Zur drehbaren Lagerung des Verbindungselements kann an dessen Außenumfang wenigstens ein Wälzlager vorgesehen sein, welches beispielsweise als Schrägkugellager ausgebildet sein kann. Dieses wenigstens eine Wälzlager kann in einen gestuften Durchgang des Gehäuses eingesetzt sein, wobei der wenigstens eine Außenring des wenigstens einen Wälzlagers einenends auf der Stufe des Durchgangs aufliegt und andernends durch einen Gewindering im Durchgang des Gehäuses gehalten ist. In analoger Weise kann der wenigstens eine Innenring des wenigstens einen Wälzlagers einenends an einer Stufe des Verbindungselements anliegen und andernends ebenfalls durch einen Gewindering gehalten sein. Bei Einsatz eines Klemmrings kann dabei auf einen gesonderten Gewindering verzichtet werden, wobei dann der Klemmring auch die Funktion des Gewinderings übernimmt.

Wenn am Außenumfang des Verbindungselements die innere Laufbahn des wenigstens einen Wälzlagers ausgebildet ist, so kann hierdurch nicht nur eine geringere Bauhöhe der erfindungsgemäßen Lagereinheit erzielt werden, sondern es kann unabhängig vom Einsatz eines Klemmrings auf einen gesonderten Gewindering verzichtet werden.

In Weiterbildung der Erfindung kann das Gehäuse an einer übergeordneten Baueinheit befestigbar sein. Diese übergeordnete Baueinheit kann dabei entweder eine Montageplatte sein, auf der die Lagereinheit und gegebenenfalls die gesamte Lineareinheit, der die Lagereinheit angehört, befestigt sind. Alternativ ist es jedoch auch möglich, dass das Gehäuse an einem Hauptkörper eines Linearmoduls befestigbar ist. In beiden Fällen ist es vorteilhaft, wenn das Gehäuse zudem an einer die Antriebswelle aufweisenden Antriebseinheit befestigbar ist.

Gemäß einem weiteren Gesichtspunkt der Erfindung betrifft diese ferner eine Lineareinheit, umfassend eine Antriebseinheit mit einer um eine Drehachse drehbaren Antriebswelle, eine Gewindespindel eines Gewindetriebs und eine erfindungsgemäße Lagereinheit der vorstehend erläuterten Bauweise, insbesondere mit einem Verbindungselement zum Herstellen einer drehfesten Verbindung zwischen der Antriebswelle und der Gewindespindel.

Die Erfindung wird im Folgenden anhand der beigefügten Zeichnungen an Ausführungsbeispielen näher erläutert werden. Es stellen dar:
- Figur 1: eine perspektivische Ansicht einer mit einer erfindungsgemäßen Lagereinheit bestückten Lineareinheit;
- Figur 2: eine Explosionsansicht einer ersten Ausführungsform einer erfindungsgemäßen Lagereinheit;
- Figur 3: eine perspektivische Schnittansicht der Lagereinheit gemäß Figur 2;
- Figur 4: eine perspektivische Ansicht einer ersten Ausführungsvariante eines Verbindungselements;
- Figur 5: eine perspektivische Ansicht einer zweiten Ausführungsvariante eines Verbindungselements;
- Figur 6: eine Explosionsansicht einer zweiten Ausführungsform einer erfindungsgemäßen Lagereinheit; und
- Figur 7: eine perspektivische Schnittansicht der Lagereinheit gemäß Figur 6.

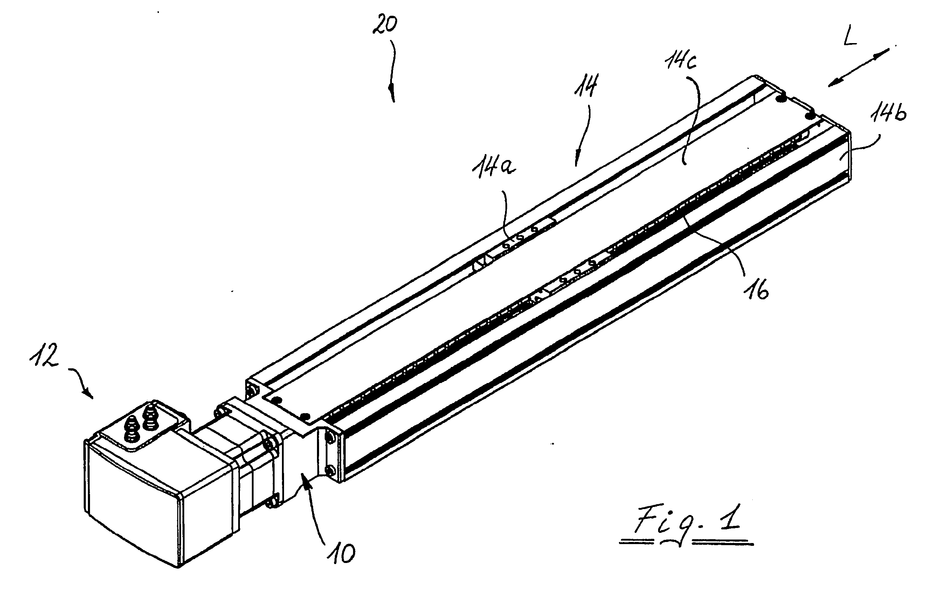

In Figur 1 ist eine erfindungsgemäße Lagereinheit ganz allgemein mit 10 bezeichnet. Genauer gesagt ist die Lagereinheit 10 als Teil eines Linearmoduls 20 dargestellt, welches ferner eine Antriebseinheit 12 und eine Modulhaupteinheit 14 umfasst.

In dem dargestellten Ausführungsbeispiel ist die Modulhaupteinheit 14 mit einem Spindeltrieb ausgebildet, wie er an sich bekannt ist. Daher braucht der Spindeltrieb hier nicht näher erläutert zu werden. Es sei lediglich erwähnt, dass er einen Führungswagen 14a umfasst, der in einem Gehäuseteil 14b in Längsrichtung L verschiebbar gelagert ist. Die Gewindespindel 16 des Spindeltriebs, die mit einer (nicht dargestellten) mit dem Führungswagen 14a verbundenen Gewindemutter, insbesondere Wälzkörpermutter des Spindeltriebs im Gewindeeingriff steht, ist in Figur 1 teilweise durch ein dem Gehäuseteil 14b zugehöriges Abdeckblech 14c verdeckt

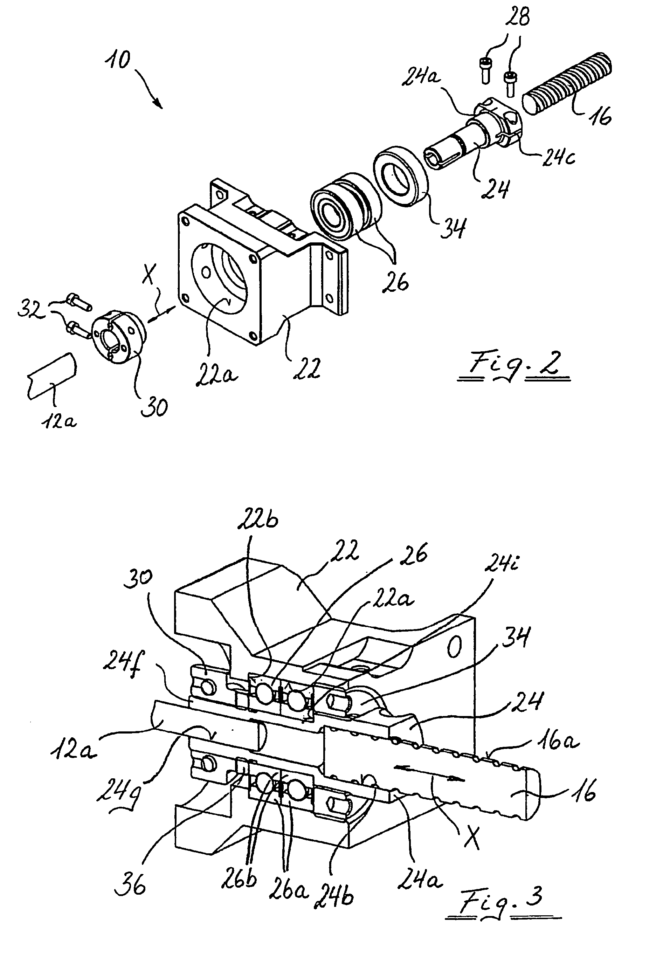

In den Figuren 2 und 3 ist die erfindungsgemäße Lagereinheit 10 in Explosionsdarstellung bzw. in geschnittener Perspektivdarstellung gezeigt. Sie umfasst ein Gehäuse 22, das, wie in Figur 1 dargestellt ist, einenends mit dem Hauptkörper 14b und andernends mit der Antriebseinheit 12 verbunden, insbesondere verschraubt ist. Darüber hinaus umfasst die Lagereinheit 10 ein Verbindungselement 24, welches in dem Gehäuse 22 mittels zweier Wälzlager 26, beispielsweise zweier Schrägkugellager, um eine Drehachse X drehbar gelagert ist. Das Verbindungselement 24 dient der Verbindung der Gewindespindel 16 des Gewindetriebs mit der Antriebswelle 12a der Antriebseinheit 12.

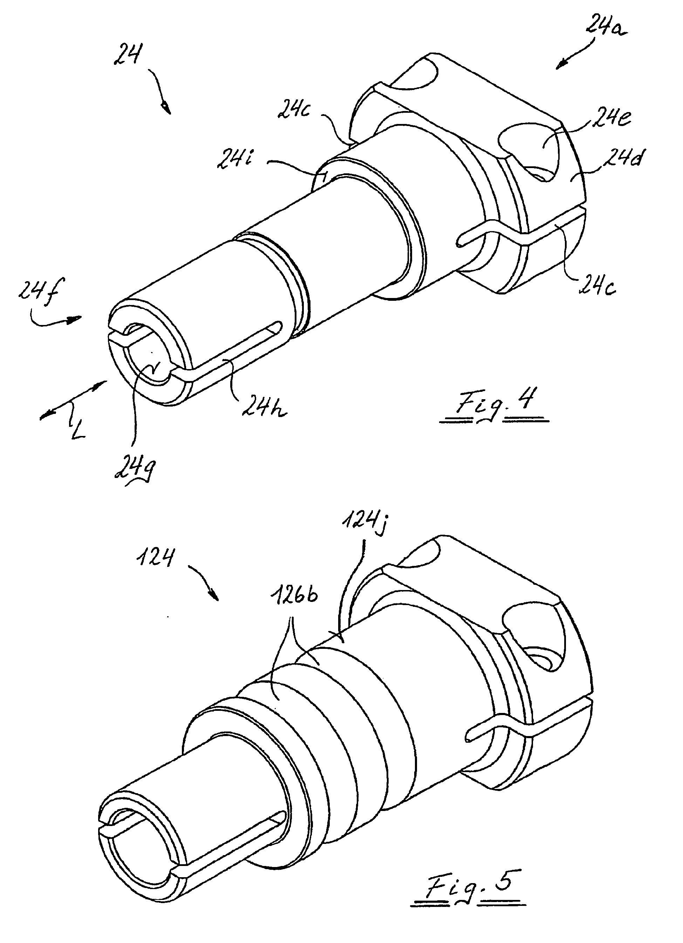

An seinem der Gewindespindel 16 zugewandten Ende 24a ist das Verbindungselement 24 mit einer Ausnehmung 24b ausgebildet, welche zur Aufnahme der Gewindespindel 16 dient. Wie auch in Figur 4 dargestellt ist, sind von diesem Ende 24a her zwei Schlitze 24c in das Verbindungselement 24 eingebracht, welche das Verbindungselement 24 in radialer Richtung vollständig durchsetzen und sich in Richtung der Drehachse X über eine vorbestimmte Distanz erstrecken. Im Bereich des axial offenen Endes jedes dieser Schlitze 24c ist das Verbindungselement 24 mit einem an ihm einstückig angeformten, radialen Ansatz 24d versehen, in welchem ein Spanndurchgang 24e für eine Spannschraube 28 ausgebildet ist. Mit Hilfe der Spannschrauben 28 können die Schlitze 24c eingeengt werden, so dass sich die Aufnahme 24b bezüglich der Drehachse X in Umfangsrichtung koaxial gegen die Außenumfangsfläche 16a der Gewindespindel 16 anlegt und diese hält.

In analoger Weise weist auch das der Antriebswelle 12a zugewandte Ende 24f des Verbindungselements 24 eine Ausnehmung 24g zur Aufnahme der Antriebswelle 12a auf. Ferner sind in das Verbindungselement 24 von dessen der Antriebswelle 12a zugewandtem Ende 24f her Schlitze 24h eingebracht, welche zusammen mit einem Klemmring 30 und dessen Spannmitteln 32 der Befestigung der Antriebswelle 12a an dem Verbindungselement 24 dienen.

Der Umstand, dass an dem der Antriebswelle 12a zugewandten Ende 24f ein gesonderter Klemmring 30 vorgesehen ist und nicht wie an dem der Gewindespindel 16 zugewandten Ende 24a ein einstückig ausgebildeter Klemmansatz 24d, ist lediglich darauf zurückzuführen, dass das Gehäuse 22 der Lagereinheit 10 in dem dargestellten Ausführungsbeispiel einstückig ausgebildet ist. Würde das Gehäuse 22 zwei aneinander befestigbare Lagerschalen aufweisen, so könnte auch an dem der Antriebswelle 12a zugewandten Ende 24f ein einstückig ausgebildeter Klemmansatz vorgesehen sein. Unabhängig von den vorstehend diskutierten Varianten für die Ausbildung des Gehäuses kann selbstverständlich auch der Klemmansatz 24d durch einen gesonderten Klemmring ersetzt werden, auch wenn dies aus fertigungstechnischen Gründen nicht bevorzugt ist.

Wie in Figur 3 dargestellt ist, ist der zentrale Durchgang 22a des Gehäuses 22 mit einer Stufe 22b ausgebildet, gegen welche sich die Außenringe 26a der Wälzlager 26 in axialer Richtung anlegen. Ein in den Durchgang 22a eingeschraubter Gewindering 34 dient der Sicherung der Wälzlager 26 in dem Durchgang 22a des Gehäuses 22. In analoger Weise legen sich die Innenringe 26b der Wälzlager 26 in axialer Richtung gegen eine Stufe 24i des Verbindungselements 24 an und sind in dem Durchgang 22a des Gehäuses 22 mittels eines auf das Verbindungselement 24 aufgeschraubten Gewinderings 36 gesichert. Auf diese Weise ist die Lagereinheit 10 als Festlagereinheit ausgebildet, das heißt als Lagereinheit, welche in axialer Richtung keine Verschiebung der Gewindespindel zulässt.

Eine bevorzugte Ausführungsform besteht darin, den Gewindering 36 und den Klemmring 30 einstückig auszubilden.

In Figur 5 ist eine abgewandelte Ausführungsform eines Verbindungselements dargestellt, wie es bei einer erfindungsgemäßen Lagereinheit zum Einsatz kommen kann. Das Verbindungselement gemäß Figur 5 entspricht im Wesentlichen dem Verbindungselement 24 gemäß Figur 4. Daher sind in Figur 5 sämtliche Teile mit den gleichen Bezugszeichen versehen wie in Figur 4, jedoch vermehrt um die Zahl 100. Ferner wird das Verbindungselement 124 gemäß Figur 5 im Folgenden nur insoweit beschrieben werden, als es sich von dem Verbindungselement 24 gemäß Figur 4 unterscheidet, auf dessen Beschreibung hiermit ansonsten ausdrücklich verwiesen sei.

Das Verbindungselement 124 gemäß Figur 5 unterscheidet sich von dem Verbindungselement 24 gemäß Figur 4 lediglich dadurch, dass es zusätzlich auch noch die Funktion der Innenringe 26b der Wälzlager 26 übernimmt. Es ist hierzu an seiner Außenumfangsfläche 124j mit zwei Laufbahnen 126b für die Wälzkörper der Wälzlager ausgebildet. Dies hat nicht nur den fertigungstechnischen Vorteil, dass die erfindungsgemäße Lagereinheit 10 aus einer geringeren Anzahl von Bauteilen zusammengesetzt ist, sondern auch den weiteren Vorteil, dass sie kleiner baut und für sie somit weniger Bauraum vorgesehen zu werden braucht.

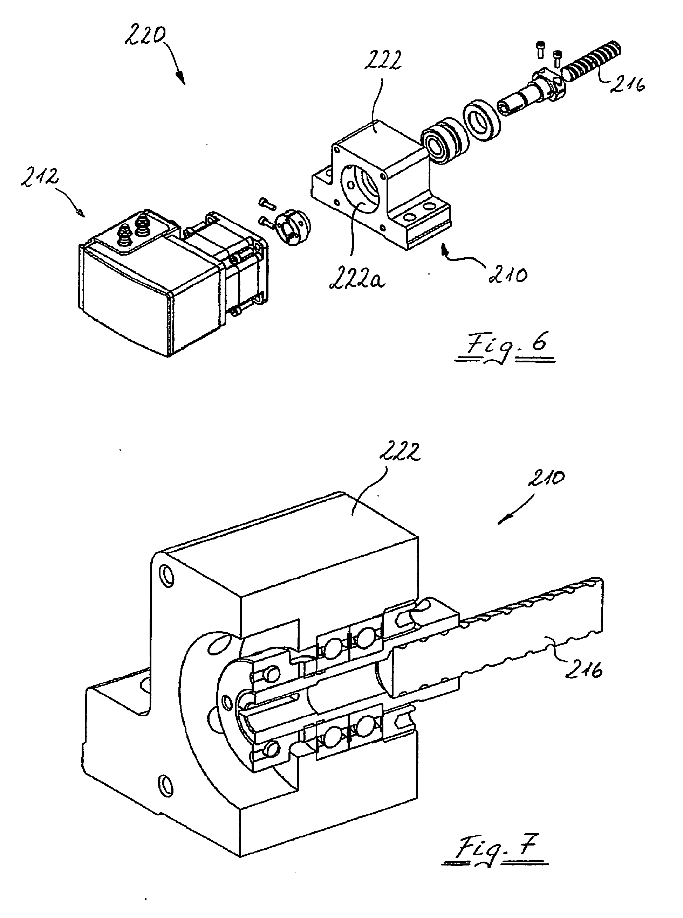

Das Ausführungsbeispiel gemäß Figuren 6 und 7 soll verdeutlichen, dass erfindungsgemäße Lagereinheiten nicht nur bei dem in Figur 1 dargestellten Linearmodul 20 eingesetzt werden können, sondern auch bei einer herkömmlichen Lineareinheit 220. Die Ausführungsform gemäß Figur 6 wird daher im Folgenden nur insoweit beschrieben werden, als sie sich von der Ausführungsform gemäß Figuren 1 bis 4 und deren Variante gemäß Figur 5 unterscheidet, auf deren Beschreibung hiermit ansonsten ausdrücklich verwiesen sei.

Die Lineareinheit 220 gemäß Figuren 6 und 7 verfügt über eine Antriebseinheit 212, welche zum Antrieb einer freiliegenden Gewindespindel 216 dient. Insbesondere ist also kein dem Hauptkörper 14b entsprechendes Gehäuseteil vorgesehen. Daher ist das Gehäuse 222 der Lagereinheit 210 auch nicht zur Befestigung an einem solchen Hauptkörper ausgebildet, sondern zur Befestigung an einer (nicht dargestellten) Montageplatte. Der innere Aufbau des Gehäuses 222, insbesondere was dessen Durchgang 222a anbelangt, ist hingegen zu jenem des Gehäuses 22 identisch. Da sich dies ohne Weiteres insbesondere aus einem Vergleich der Figur 7 mit der Figur 3 ergibt, braucht der innere Aufbau des Gehäuses 222 hier nicht nochmals beschrieben zu werden.

## Patentansprüche

1. Lagereinheit (10), umfassend ein Gehäuse (22) und ein in dem Gehäuse (22) um eine Drehachse (X) drehbar gelagertes Verbindungselement (24) zum Herstellen einer drehfesten Verbindung zwischen einer Antriebswelle (12a) und einer Gewindespindel (16) eines Gewindetriebs,
wobei das Verbindungselement (24) an seinem der Gewindespindel (16) zugewandten Ende (24a) eine zur Drehachse (X) koaxial verlaufende Ausnehmung (24b) zur Aufnahme eines Endabschnitts der Gewindespindel (16) aufweist,
wobei das der Gewindespindel (16) zugewandte Ende (24a) des Verbindungselements (24) wenigstens einen Schlitz (24c) aufweist, der mittels Spannmitteln (24d/24e/28) einengbar ist
**dadurch gekennzeichnet, dass** das Verbindungselement (24) an seinem der Antriebswelle (12a) zugewandten Ende (24f) eine zur Drehachse (X) koaxial verlaufende Ausnehmung (24g) zur Aufnahme eines Endabschnitts der Antriebswelle (12a) aufweist.

2. Lagereinheit nach Anspruch 1,
**dadurch gekennzeichnet, dass** die Spannmittel (24d/24e/28) wenigstens eine Spannschraube (28) umfassen, die in einen Spanndurchgang (24e) eingreift, welcher in einem mit dem Verbindungselement einstückigen Ansatz (24d) ausgebildet ist.

3. Lagereinheit nach Anspruch 1 oder 2,
**dadurch gekennzeichnet, dass** das der Gewindespindel (16) zugewandte Ende (24a) des Verbindungselements (24) wenigstens ein Paar von einander bezüglich der Drehachse (X) diametral gegenüberliegenden Schlitzen (24c) aufweist.

4. Lagereinheit nach einem der vorstehenden Ansprüche,
**dadurch gekennzeichnet, dass** das der Antriebswelle (12a) zugewandte Ende (24f) des Verbindungselements (24) wenigstens einen Schlitz (24h) aufweist, der mittels Spannmitteln (30/32) einengbar ist, vorzugsweise wenigstens ein Paar von einander bezüglich der Drehachse (X) diametral gegenüberliegenden Schlitzen (24h).

5. Lagereinheit nach Anspruch 4,
**dadurch gekennzeichnet, dass** die Spannmittel (30/32) einen geschlitzt oder geteilt ausgeführten Klemmring (30) umfassen.

6. Lagereinheit nach einem der vorstehenden Ansprüche,
**dadurch gekennzeichnet, dass** das Verbindungselement (24) hülsen- bzw. rohrförmig ausgebildet ist.

7. Lagereinheit nach einem der vorstehenden Ansprüche,
**dadurch gekennzeichnet, dass** das Verbindungselement (24) in dem Gehäuse (22) in Richtung der Drehachse (X) axial fest gelagert ist.

8. Lagereinheit nach einem der vorstehenden Ansprüche,
**dadurch gekennzeichnet, dass** am Außenumfang des Verbindungselements (24) wenigstens ein Wälzlager (26) vorgesehen ist.

9. Lagereinheit nach Anspruch 8,
**dadurch gekennzeichnet, dass** am Außenumfang (124j) des Verbindungselements (124) die innere Laufbahn (126b) des wenigstens einen Wälzlagers ausgebildet ist.

10. Lagereinheit nach einem der vorstehenden Ansprüche,
**dadurch gekennzeichnet, dass** das Gehäuse (222) an einer übergeordneten Baueinheit befestigbar ist.

11. Lagereinheit nach einem der vorstehenden Ansprüche,
**dadurch gekennzeichnet, dass** das Gehäuse (22) an einem Hauptkörper (14b) eines Linearmoduls (20) befestigbar ist.

12. Lagereinheit nach einem der vorstehenden Ansprüche,
**dadurch gekennzeichnet, dass** das Gehäuse (22) an einer die Antriebswelle (12a) aufweisenden Antriebseinheit (12) befestigbar ist.

13. Lineareinheit (20), umfassend
- eine Antriebseinheit (12) mit einer um eine Drehachse (X) drehbaren Antriebswelle (12a),
- eine Gewindespindel (16) eines Gewindetriebs, und
- eine Lagereinheit (10) nach einem der vorstehenden Ansprüche mit einem Verbindungselement (24) zum Herstellen einer drehfesten Verbindung zwischen der Antriebswelle (12a) und der Gewindespindel (16).

14. Lineareinheit (20) nach Anspruch 13,
**dadurch gekennzeichnet, dass** der Gewindetrieb als ein Kugelgewindetrieb ausgebildet ist.

## Claims

1. Bearing unit (10), comprising a housing (22) and a connecting element (24) mounted in the housing (22) so as to be rotatable about a rotation axis (X) for producing a connection for conjoint rotation between a drive shaft (12a) and a screw spindle (16) of a screw drive,
wherein the connecting element (24), at the end (24a) thereof facing the screw spindle (16), has a recess (24b) running coaxially to the rotation axis (X) for accommodating an end section of the screw spindle (16), wherein the end (24a) of the connecting element (24) which faces the screw spindle (16) has at least one slot (24c) which can be narrowed by means of clamping means (24d/24e/28),
**characterized in that** the connecting element (24), at the end (24f) thereof facing the drive shaft (12a), has a recess (24g) running coaxially to the rotation axis (X) for accommodating an end section of the drive shaft (12a).

2. Bearing unit according to Claim 1, **characterized in that** the clamping means (24d/24e/28) comprise at least one clamping screw (28) which engages in a clamping passage (24e) which is formed in an extension (24d) which is in one piece with the connecting element.

3. Bearing unit according to Claim 1 or 2, **characterized in that** the end (24a) of the connecting element (24) which faces the screw spindle (16) has at least one pair of slots (24c) which are diametrically opposite one another with respect to the rotation axis (X).

4. Bearing unit according to one of the preceding claims, **characterized in that** the end (24f) of the connecting element (24) which faces the drive shaft (12a) has at least one slot (24h) which can be narrowed by means of clamping means (30/32), preferably at least one pair of slots (24h) which are diametrically opposite one another with respect to the rotation axis (X).

5. Bearing unit according to Claim 4, **characterized in that** the clamping means (30/32) comprise a slotted or split clamping ring (30).

6. Bearing unit according to one of the preceding claims, **characterized in that** the connecting element (24) is of sleeve-shaped or tubular design.

7. Bearing unit according to one of the preceding claims, **characterized in that** the connecting element (24) is mounted in the housing (22) in an axially fixed manner in the direction of the rotation axis (X).

8. Bearing unit according to one of the preceding claims, **characterized in that** at least one rolling-contact bearing (26) is provided on the outer circumference of the connecting element (24).

9. Bearing unit according to Claim 8, **characterized in that** the inner raceway (126b) of the at least one rolling-contact bearing is formed on the outer circumference (124j) of the connecting element (124).

10. Bearing unit according to one of the preceding claims, **characterized in that** the housing (22) can be fastened to a primary construction unit.

11. Bearing unit according to one of the preceding claims, **characterized in that** the housing (22) can be fastened to a main body (14b) of a linear module (20).

12. Bearing unit according to one of the preceding claims, **characterized in that** the housing (22) can be fastened to a drive unit (12) having the drive shaft (12a).

13. Linear unit (20), comprising
- a drive unit (12) having a drive shaft (12a) which can rotate about a rotation axis (X),
- a screw spindle (16) of a screw drive, and
- a bearing unit (10) according to one of the preceding claims comprising a connecting element (24) for producing a connection for conjoint rotation between the drive shaft (12a) and the screw spindle (16).

14. Linear unit (20) according to Claim 13, **characterized in that** the screw drive is designed as a ball screw drive.

## Revendications

1. Unité de palier (10), comprenant un boîtier (22) et un élément de connexion (24) monté dans le boîtier (22) de manière à pouvoir tourner autour d'un axe de rotation (X) pour créer une connexion solidaire en rotation entre un arbre d'entraînement (12a) et une broche filetée (16) d'un entraînement à vis,
l'élément de connexion (24) présentant sur son extrémité (24a) tournée vers la broche filetée (16) un évidement (24b) s'étendant coaxialement à l'axe de rotation (X) pour recevoir une portion d'extrémité de la broche filetée (16),
l'extrémité (24a) de l'élément de connexion (24) tournée vers la broche filetée (16) présentant au moins une fente (24c) qui peut être rétrécie par le biais de moyens de serrage (24d/24e/28),
**caractérisée en ce que** l'élément de connexion (24) présente à son extrémité (24f) tournée vers l'arbre d'entraînement (12a) un évidement (24g) s'étendant coaxialement à l'axe de rotation (X) pour recevoir une portion d'extrémité de l'arbre d'entraînement (12a).

2. Unité de palier selon la revendication 1,
**caractérisée en ce que** les moyens de serrage (24d/24e/28) comprennent au moins une vis de serrage (28) qui vient en prise dans un passage de serrage (24e) qui est réalisé dans une pièce (24d) réalisée d'une seule pièce avec l'élément de connexion.

3. Unité de palier selon la revendication 1 ou 2,
**caractérisée en ce que** l'extrémité (24a) de l'élément de connexion (24) tournée vers la broche filetée (16) présente au moins une paire de fentes (24c) diamétralement opposées l'une à l'autre par rapport à l'axe de rotation (X).

4. Unité de palier selon l'une quelconque des revendications précédentes,
**caractérisée en ce que** l'extrémité (24f) de l'élément de connexion (24) tournée vers l'arbre d'entraînement (12a) présente au moins une fente (24h) qui peut être rétrécie par le biais de moyens de serrage (30/32), de préférence au moins une paire de fentes (24h) diamétralement opposées l'une à l'autre par rapport à l'axe de rotation (X).

5. Unité de palier selon la revendication 4,
**caractérisée en ce que** les moyens de serrage (30/32) comprennent une bague de serrage (30) réalisée de manière fendue ou divisée.

6. Unité de palier selon l'une quelconque des revendications précédentes,
**caractérisée en ce que** l'élément de connexion (24) est réalisé en forme de douille ou de tube.

7. Unité de palier selon l'une quelconque des revendications précédentes,
**caractérisée en ce que** l'élément de connexion (24) est monté axialement fixement dans le boîtier (22) dans la direction de l'axe de rotation (X).

8. Unité de palier selon l'une quelconque des revendications précédentes,
**caractérisée en ce qu'**au moins un palier à roulement (26) est prévu sur la périphérie extérieure de l'élément de connexion (24).

9. Unité de palier selon la revendication 8,
**caractérisée en ce que** la piste de roulement interne (126b) de l'au moins un palier à roulement est réalisée sur la périphérie extérieure (124j) de l'élément de connexion (124).

10. Unité de palier selon l'une quelconque des revendications précédentes,
**caractérisée en ce que** le boîtier (222) peut être fixé sur une unité constructive supérieure.

11. Unité de palier selon l'une quelconque des revendications précédentes,
**caractérisée en ce que** le boîtier (22) peut être fixé sur un corps principal (14b) d'un module linéaire (20).

12. Unité de palier selon l'une quelconque des revendications précédentes,
**caractérisée en ce que** le boîtier (22) peut être fixé sur une unité d'entraînement (12) présentant l'arbre d'entraînement (12a).

13. Unité linéaire (20), comprenant :
- une unité d'entraînement (12) avec un arbre d'entraînement (12a) pouvant tourner autour d'un axe de rotation (X),
- une broche filetée (16) d'un entraînement à vis, et
- une unité de palier (10) selon l'une quelconque des revendications précédentes, comprenant un élément de connexion (24) pour créer une connexion solidaire en rotation entre l'arbre d'entraînement (12a) et la broche filetée (16).

14. Unité linéaire (20) selon la revendication 13,
**caractérisée en ce que** l'entraînement à vis est réalisé sous forme de vis d'entraînement à billes.
